Europäisches Patentamt

European Patent Office

Office européen des brevets

(11) Publication number: **0 147 273**
**B1**

## (12) EUROPEAN PATENT SPECIFICATION

(45) Date of publication of patent specification: **21.09.88**

(51) Int. Cl.⁴: **C 23 C 22/74,** C 09 D 5/08

(21) Application number: **84402432.3**

(22) Date of filing: **28.11.84**

(54) Coating composition.

(30) Priority: **28.11.83 US 555477**

(43) Date of publication of application:
**03.07.85 Bulletin 85/27**

(45) Publication of the grant of the patent:
**21.09.88 Bulletin 88/38**

(84) Designated Contracting States:
**AT BE CH DE FR GB IT LI LU NL SE**

(56) References cited:
**GB-A-1 015 425**
**US-A-3 248 249**
**US-A-3 713 904**

(73) Proprietor: **SERMATECH INTERNATIONAL INC.**
**155 South Limerick Road**
**Limerick PA 19468 (US)**

(72) Inventor: **Mosser, Mark F.**
**485 Washington Avenue**
**Sellersville Pennsylvania 18960 (US)**

(74) Representative: **Gutmann, Ernest**
**S.C. Ernest Gutmann - Yves Plasseraud 67,**
**boulevard Haussmann**
**F-75008 Paris (FR)**

Courier Press, Leamington Spa, England.

# 0 147 273

**Description**

The present invention relates to coating compositions for coating metal parts so as to improve their corrosion resistance to atmospheric and other environmental conditions to which they are exposed. The invention further relates to coating compositions which will form a primer coating so as to improve the adhesion between a metal part and a top coating.

The invention also relates to the metal parts coated with such compositions and to a method for coating metal parts. More particularly, the invention relates to aqueous coating compositions containing a dissolved chromium compound or phosphate and chromium or molybdenum compound and particles of leachable chromate pigments.

Coating compositions are known which consists essentially of a slurry of solid inorganic particulate material in an aqueous acidic solution containing substantial amounts of dissolved metal, chromate, dichromate, or molybdate and phosphate. After application of such coating to a substrate, it is heated to a temperature of about 260°C (500°F) until the coating is water insoluble. Such coatings usually incorporate therein metal powders, such as aluminum powder, as the solid particulate material so as to provide a sacrificial corrosive protection. That is, where, for example, the substrate for the coating is ferrous metal, the aluminum powder in the coating, by way of electrode chemical reactions which ensue in a salt-spray or other corrosive atmosphere, generally sacrifices itself to the end that there is little or no corrosion of the ferrous metal substrate. It has further been established, that this property of the sacrificiality of the coating in providing the increased corrosion protection is greatly enhanced by so processing the coating as to render it electrically conductive. Usually, the aluminum filled coatings are made sacrifical and galvanically active by either coat working (burnishing) the coating surface, or by heat treating to a temperature of about 538°C (100°F) for ninety minutes. Other heat treatments can be used. The goal being to produce an electrically conductive aluminum coating that is sacrifical, i.e. will corrode and protect the adjacent base metal areas from corrosion.

Sacrificial, burnished or heat treated coatings of this type are commonly used on jet engine compressor hardware. In other applications burnished or heat treating coatings may be used in salt environments and/or in elevated temperatures. In salt environments, particularly when coupled with elevated temperatures, the galvanic activity of the coatings produce white corrosion products or gelatenous masses of aluminum hydroxide and other products. In many applications these white products or "white rust" are as undesirable as normal rust.

Accordingly, it is an object of the present invention to provide a means for eliminating all white corrosion products without interferring with the sacrifical action of the coating or adversely affecting any of the other coating characteristics.

It is a further object of the invention to provide a coating for metal parts which has improved humidity resistance and salt spray resistance.

It is a yet still further object of the invention to provide an improved coating composition which can be applied to parts by spraying, dipping or other methods of operation.

According to the present invention, there is now provided a means for improving salt spray resistance of water insoluble coatings formed from an aqueous acid binder solution which comprises ions of at least one of the group which is phosphate, chromate, dichromate, and molybdate through the use of leachable chromate pigments.

Broadly, one embodiment of the present invention is directed to an aqueous acidic coating composition for application, and curing on a metal substrate. Accordingly, there is prepared an adherent, water insoluble corrosion resistant coating on the substrate, which comprises an intimate mixture in an aqueous liquid medium of (a) substantial amounts of phosphate ion and ions selected from the group consisting of chromate and molybdate; and (b) particles of a lechable chromate pigment.

The phosphate can be introduced into the solution in the form of phosphoric acid, in the form of phosphates of the metal or metals to be included as the metal cation, or as is preferred, it can be added in both forms. It will be understood that the term "phosphate" is intended to comprehend not only the $PO_4$ ion, but also the $HPO_4$ and $H_2PO_4$ ions.

It is known that phosphate and chromate/phosphate coatings are useful to protect metal surfaces. It is also known to incorporate in such coatings metal powders. For instance, Kirk and Othmer, Eds., *Encyclopedia of Chemical Technology*, 2nd ed. vol. 18, Interscience Publishers, a division of John Wiley & Sons, Inc., 1969 (pages 292—303), describes phosphate and chromate coatings. The United States patent literature describes coating solutions or dispersions for protective coating of metals, which compositions are suitable for use as components of the compositions of the invention. Such suitable compositions are disclosed by Allen (No. 3,248,251); Brumbaugh (No. 3,869,293); Collins (No. 3,248,249); Wydra (No. 3,857,717); Boies (No. 3,081,146); Romig (No. 2,245,609); Helwig (No. 3,967,984); Bennetch (No. 3,443,997); Hirst (No. 3,562,011) and others. These disclosures are incorporated herein by reference. Other illustrative patents or literature showing corrosion inhibiting and protective coating compositions of phosphates, mixtures of phosphates and chromates and/or molybdates are known to one skilled in the art and further examples need not be supplied. Other coating compositions have been disclosed in the state of the art.

US.A.3.713.903 discloses a coating process for forming a coating composition formed by an aqueous solution comprising inorganic hexavalent chromium, organic resin, an oxidizable component, phosphoric

2

acid and strontium chromate or equivalent. These components are mixed together and the resulting composition is in a dissolved state.

GB.A.1.015.425 describes a composition which is a solution containing phosphate and chromate ions, together with a metal ion, and a metal powder. Solid chromium is not disclosed in this application.

US.A.3.248.249 concerns a composition which is an aqueous solution. This disclosure does not include solid chromate pigments.

According to the present invention there is provided a coating composition which has enhanced salt spray resistance, that can be applied to different varieties of substrates and which can be applied by any of the methods of spraying, dipping, brushing, etc. The coating composition comprises (a) an aqueous acid coating solution comprising phosphate ions and ions of the group of chromate ions and/or molybdate ion, and (b) about 1 to about 20% by weight of particulates of a leachable chromate pigment based on weight of other solids in the solution, preferably, 1 to 10% by weight of leachable chromate pigment based on weight of other solids. When the amount of leachable pigment is below this range the beneficial effect of the presence is hardly noticed. Utilizing a larger amount is costly and causes difficulty in uniformly applying the composition.

In accordance with a preferred embodiment of the invention, a coating is formed by employing a chromate/phosphate solution in which the leachable chromate pigments are dispersed therein and this solution is heat cured to a substantially water-insoluble state whereby the leachable chromate pigments are bonded therein.

The combination of compounds in said above-mentioned solution (a) is such as will provide at least 0.1 mole per liter of dissolved phosphate (preferably 0.5 mole per liter), and at least 0.2 mole per liter of a compound from the group consisting of chromate and molybdate.

In the phosphate solution it is not necessary that a metal ion be added. When the phosphate and/or chromate or molybdate ion is furnished to the solution by addition of a metal salt, as is often done, metal ion is inherently supplied to the solution. Hence, any of the known phosphates, chromates dichromates or molybdates can be used as the source of metal ion. Additionally, as is known, metal ion can be supplied in a form such as metal oxide, hydroxide, carbonate, etc. which will dissolve in acid, i.e. phosphoric acid, chromic acid or molybdic acid, to produce the metal phosphate, chromate or molybdate, and therefore the metal ion plus water and/or gas which is evolved. The following metal compounds will illustrate those which can be added to generate the metal ion within the solution, by an acid-base reaction, in accordance with the above: magnesium oxide; magnesium hydroxide; zinc oxide; zinc hydroxide; aluminum hydroxide; lithium oxide; lithium carbonate; and calcium hydroxide. Metal compounds which may be added to generate the metal ion in solution are various oxides, hydroxide or carbonates of magnesium, zinc, aluminum or others. Such procedures and sources for the metal ions are known and reference may be made to the cited '251 Allen patent, for instance, column 7, lines 26—57, which is incorporated herein by reference.

The pH of the aqueous binder used herein is preferably, but not necessarily, in the range of about 0 to about 3.0, preferably in the range of about 1.5 to about 2.5.

If it is desired to prepare coating compositions which are especially well-suited for dip/spin, or application by dipping, the compositions may, optionally, contain certain amorphous silicas and a non-ionic surfactant, which causes the composition to be thixotropic. Such suitable additives (and the resulting compositions) are described in copending application published on May 24, 1984 under number WO 84/01954 which is incorporated herein by reference. Likewise, the compositions of the invention may be made thixotropic by incorporation of certain aluminas as disclosed in copending application published on November 22, 1984 under number DE—A—3414601, which is incorporated herein by reference.

The compositions of this invention may, therefore, incorporate an acid-stable, non-colloidal amorphous silica and a non-ionic surfactant. Preferred is fumed silica, silica gel and precipitated silica. The viscosity generally ranges from about 600 to 45,000 cp. The pH will generally range from about 0.5 to 3.0. When the composition comprises a dispersible hydrated alumina having a bohemite type crystal lattice, the viscosity is generally in the range of about 800 to about 50,000 cp. The pH generally ranges from about 1.5 to about 3.0.

It is a noteworthy aspect that by virtue of the ingredients of the compositions of the invention, the compounds which cause thixotropy (in accordance with the two above-referred to patent applications) can be used in a smaller amount and still cause the necessary thixotropy. For instance, an amount of silica of 0.1 to 3 percent by weight based on total solids may be used. In conjunction therewith, an acid-stable non-ionic surfactant in an amount of 0.005 to 0.1 percent by weight based on total solids may be used. Likewise, when it is desired to use a fumed alumina, less than 0.25% by weight such as 0.1% by weight may be used. It is understood, however, that the parameters of the ingredients disclosed in the above-referred to patent applications are quite applicable herein, but that these ingredients are usable in smaller proportions (or in the lower ranges) disclosed therein by virtue of the effect of the small size pigment particles added in accordance with this invention.

On the coatings of the invention (at any stage prior to and including after rendering the coating sacrificial), there may be applied one or more layers of a coating of the invention, or of a conventional coating. Such top coatings are disclosed in the art. Such top coatings can be one of the above-described binders (without the aluminum), may have surfactants or other modifiers of the surface tension, including a fluorocarbon surfactant, cellosolve acetate, fumed silica, hypophosphites or other additives. The top coatings may also be those which are commonly applied by plasma spraying or electrodepositing.

Among the suitable leachable chromate pigments are strontium chromate and the zinc chromates. The zinc chromates include zinc yellow, zinc tetroxy chromate, zinc potassium chromate, zinc chromate, and the like.

It has been found, that addition of leachable strontium chromate and/or zinc chromates to the coatings eliminates all white corrosion products without interfering with the sacrificial action of the coating or adversely affecting any of the other coating characteristics. Additionally, the presence of the leachable chromates provides humidity resistance and improved salt-spray resistance.

Surprisingly, despite the fact that the acid binder when cured forms an insoluble state, the chromate pigments remain leachable. Also, upon leaching, the integrity of the coating film is not destroyed.

In addition, the present invention relates to a coated metal substrate, and the preparation of such a substrate exhibiting the above described adherent and corrosion resistant coatings.

The metal substrates contemplated by the present invention are exemplified by the metal substrates to which a phosphate/chromate acid solution may or can be applied for enhancing corrosion resistance of such substrate metals. For example, such metal substrates include aluminum and aluminum alloys, steel, stainless steel, ferrous, zinc, cadmium, powder metal parts and the like.

It is noteworthy that in accordance with the invention, a greater latitude is provided in the type of chromate/phosphate compositions which can be used. For instance, with respect to the Allen Patent No. 3,248,251, it is not necessary that the acid binder be confined to the various concentrations and other molar relationships disclosed by that patent. The present invention, therefore, allows for the use of a large number of and a great variety of acid binder solutions for making the coating comopsitions.

It is preferred to maintain the chromate/phosphate ratio constant so as to improve formability. It is also preferable to have the metal ion concentrations low to improve curing at lower temperatures. In the composition the preferred metal ion is magnesium, however, zinc and aluminum ions as well as other ions can also be utilized.

Before starting the treatment of the present invention it is, in most cases, advisable to remove foreign matter from the metal surface by thoroughly cleaning and degreasing. Degreasing may be accomplished with known agents, for instance, with agents containing sodium metasilicate, caustic soda, carbon tetrachloride, trichloroethylene, and the like. Commercial alkaline cleaning compositions which combine washing and mild abrasive treatments can be employed for cleaning, e.g. an aqueous trisodium phosphate-sodium hydroxide cleaning solution. In addition to cleaning, the substrate may undergo cleaning plus etching or grit blasting.

After the coating composition has been prepared and thoroughly mixed, it can be applied to a surface by using a spray, dip, dip/spin, knife or flow coating technique depending upon the viscosity of the dispersion, solution or slurry. After the primer composition has been applied to a substrate by any of the above techniques, it is fused into a continuous adherent film by heating. Curing temperatures range between about 176.7°C (350°F) and about 427°C (800°F), preferably between about 232.2°C (450°F) and about 399°C (750°F), for example, 260°C (500°F) to 271°C (520°F) for a period of from about a few seconds to about 2 hours, preferably for a period from about a few seconds to about 2 hours for examples containing resin primers. Metal filled coatings are usually cured for 30 to 60 minutes at 315.6 (600) to 371.1°C (700°F). Generally, the higher the cure temperature, the shorter the residence period of the coating composition at that temperature.

In accordance with the invention, the coating composition of the invention comprises, in addition to the acid binder which comprises phosphate ions and ions of the group of chromate or molybdate ions, metal particles dispersed therein. Most preferably the metal is aluminum and its alloys. However, any combination of metals may be utilized depending upon the requirements. Ideally, the metal particles is present in a ratio of 1.5 to 1 to about 5 to 1 grams per liter of solution to other solids in the solution. For other metals, the ratio will vary with the density of the powder. A range of 1.5 to 15 to 1 is typical.

Therefore, in accordance with the invention, there is provided the liquid acid solution (which contains the chromate or phosphate ions), the leachable chromate pigments and the particulate metallic material, which preferably is aluminum.

A preferred manner of forming the first layer of the coatings of the invention is to admix the particulate metal material and leachable pigments under vigorous mixing conditions into the acid solution.

The sequence of addition of the components of the phosphate solution is not critical either, as is disclosed in the prior art, for instance, the Allen Patent No. 3,248,251.

However, it is critical that the leachable pigments are not dissolved in the binder so that it is preferable to add the pigments to the binder after it is prepared and cooled.

It is understood that other particulate materials may be added to the binder prior to mixing in amounts depending on the specific characteristics desired for the layer such as graphite, refractory metal oxides, refractory or metal carbides, nitrides, silicides or borides and resins (for example, polyvinylidene fluoride).

The following examples illustrate the preparation of the coatings of the invention and are not to be considered limitations thereof.

Example 1
A coating composition of the present invention was prepared as follows:

A. Preparation of binder.
A binder having the following ingredients was prepared:

| | |
|---|---|
| Water (denionized) | 780 ml |
| Magnesium oxide | 74 g |
| Chromic acid | 90 g |
| Phosphoric acid (85%) | 373 g |

The magnesium oxide and chromic acid were admixed with water and then the phosphoric acid was added.

B. Preparation of coating.

| | |
|---|---|
| Binder of part A | 100 ml |
| Atomized aluminum powder | 82 g |
| (Average particle size (FSSS) 5.5 μm) | |
| Strontium chromate | 10 g |

The ingredients were admixed and the resulting composition was spray applied to degreased, grit blasted steel and cured at 315.6°C (600°F) for 40 minutes. The coating applied and cured in the manner listed will show improved resistance to atmospheric corrosion. When thermally treated at 538°C (1000°F) or burnished to produce surface conductivity, the addition of the strontium chromate does not interfere with these processes. Additionally, after either of these treatments and exposure to salt spray, no white sacrifical by-products are produced.

Example 2
A coating composition of the type disclosed by Wydra (U.S. Patent No. 3,857,717) was prepared as follows:

| | |
|---|---|
| Water (deionized) | 295 ml |
| Phosphoric acid (85%) | 87 g |
| Phosphorous acid | 42 g |
| Chromic acid | 62 g |
| Aluminum powder (atomized 5.5 μm av. particle size) | 300 g |
| Strontium chromate | 30 g |

The phosphoric acid, phosphorous acid and chromic acid were admixed with water. To the mixture was added with stirring the aluminum powder. The mixture was cooled and the strontium chromate was added.

The resulting composition was sprayed on a clean muffler and dried at 121.1°C (250°F) for 30 minutes. After cooling to room temperature the muffler was coated with a conventional silicone-alkyd black high temperature coating. The coating combination was then cured at 232.2°C (450°F) for 15 minutes. Upon exposure to use temperature (538°C) (1000°F) for two hours followed by salt fog, the coating remained black and free from red rust and white sacrificial products after 336 hours of testing per ASTM B117 in the salt fog cabinet.

Example 3
A coating composition of the invention was prepared by mixing the following ingredients:

| | |
|---|---|
| Magnesium oxide | 58.2 g |
| Chromic acid | 286.0 g |
| Phosphoric acid (85%) | 856.3 g |
| Magnesium carbonate | 180.8 g |
| Water | 2,108.0 ml |
| Spherical aluminum powder (particle size average 3.3 μm) | 3,103.5 g |

To 620 g of the mixture, 428 g of a premixed 10% boehmite dispersion was added by stirring. The dispersion was prepared as follows:

| Water | 447.0 ml |
|---|---|
| Hypophosphorous acid (50%) | 3.6 g |
| Dispersible boehmite alumina | 45.0 g |
| Strontium chromate | 80.0 g |

The resulting coating composition has the following charcteristics:

| pH before dispersion addition | 1.6 |
|---|---|
| Viscosity before dispersion addition | 1285 cp |
| pH after dispersion addition | 2.2 |
| Viscosity after dispersion addition | 2450 cp |

.Steel parts such as screws and fasteners were coated with the composition using the dip/spin method. The coating was dried at 79.4°C (175°F) and then cured at 343.3°C (650°F). To make the coating electrically conductive, the cured parts were burnished in a blaster using aluminum oxide grit (or glass beads at low pressure). The coated parts had excellent resistance to standard salt spray and corrosion tests and no white corrosion products were visible after 336 hours of salt spray testing.

Example 4 ·

A coating composition was prepared by mixing the following ingredients:

| Water (deionized) | 380 ml |
|---|---|
| Copper chromite black spinel pigment | 100 g |
| Fumed silica (Cabosil M-5) | 12 g |

The mixture was blended for 5 minutes, then the following were added:

| 10% Nonionic surfactant in deionized water | 10 ml |
|---|---|
| Strontium chromate | 9 g |

The composition was spray applied over an aluminum powder filled chromate/phosphate composition and cured at 371°C (700°F) for 10 minutes. The black coating eliminated white corrosion products.

Example 5

A coating composition was prepared as follows utilizing the binder of Example 1:

| Binder from Example 1 | 100 ml |
|---|---|
| Distilled water | 100 ml |
| Aluminum powder, | 160 g |
| (−325 mesh, average particle size 5 μm) | |
| Strontium chromate | 10 g |
| Nonionic surfactant (Triton X-100) | 1 ml |

The resulting coating was applied over carbon steel panels that have been degreased. After spray application, the coating was cured at 287.8°C (550°F) for 15 minutes. After cooling, the coating was topcoated with an electrostatically applied epoxy powder coating and cured. This system provides extended salt spray resistance if the topcoat is damaged.

Substitution of zinc chromate at levels of 10 g and 20 g in the above formulation produced comparable results.

If desired, other particulate materials may be added to the composition prior to mixing, i.e., graphite (5—10 microns), refractory metal oxides, refractory carbides, nitrides, silicides and borides.

Example 6

A coating composition was prepared as follows:

A. Preparation of binder.

| Magnesium dichromate, six hydrate | 348 g |
|---|---|
| Phosphoric acid | 98 g |
| Magnesium dihydrogen phosphate trihydrate | 292 g |
| Water to 1000 cc | |

The above-mentioned ingredients were mixed with rapid stirring.

B. Preparation of coating composition.
To the resulting binder of part A the following pigments were added.

| | |
|---|---|
| Alloy of 70% by weight aluminum and 30% magnesium—325 mesh | 450 g |
| Aluminum powder, 5—10 µm atomized | 450 g |

Finally, 65 grams of strontium chromate was added with stirring.

The composition was suitable for coating steel parts, based on the Brumbaugh patent (3,869,293). With the strontium chromate addition, the coating retains its sacrificial nature but does not form white sacrifical by-products.

Example 7
A primer coating composition was prepared as follows:

A. Preparation of binder.

| | |
|---|---|
| Water (deionized) | 800 ml |
| Magnesium oxide | 10 g |
| Chromic acid | 57 g |
| Phosphoric acid | 100 ml |
| Fumed silica | 33 g |

The ingredients were admixed with stirring and diluted with water to 1 liter.

B. Preparation of resin dispersion.

| | |
|---|---|
| Water | 900 ml |
| Nonionic surfactant (Triton X-100) | 2.5 ml |
| Defoamer | 1 ml |
| Polyvinylidene fluoride (Kynar 301F) | 150 g |

The ingredients were admixed with stirring to form a uniform dispersion.

C. Preparation of primer

| | |
|---|---|
| Binder of Part A | 500 ml |
| Dispersion of Part B | 500 ml |
| Strontium chromate | 15 g |

The binder of Part A was mixed with the dispersion of part B and then the strontium chromate was added.

The resulting primer was applied over freshly passivated hot dip galvanized stock, cured to a peak metal temperature of 260°C (500°F).

Good adherence was provided when a top coating of polyvinylidene fluoride was sprayed on and the laminate cured.

Example 8
A coil coating primer composition for coil aluminum was prepared as follows:

A. Preparation of binder.

| | |
|---|---|
| Water (deionized) | 600 ml |
| Magnesium oxide | 20 g |
| Chromic acid | 114 g |
| Phosphoric acid (85%) | 200 ml |
| Fumed silica (Aerosil 200) | 33 g |

The ingredients were admixed and diluted to 1 liter with deionized water to form the binder portion of the primer.

B. Preparation of resin dispersion.

| | |
|---|---|
| Water (deionized) | 900 ml |
| Polyvinylidene fluoride (Kynar 310F) | 150 g |
| Nonionic surfactant (Igepal 630) | 2.5 ml |
| Defoamer (Troykyd 999) | 1.0 ml |

The ingredients were admixed and diluted with water to 1 liter.

The binder of Part A was mixed with the dispersion of Part B and then 30 g of zinc yellow was added to produce a primer coating composition. The composition when applied to a zinc diecasting substrate had a dried film thickness of 0.2—0.25 mil. After curing at 260°C (500°F) for 15 minutes it was topcoated with a polyvinylidene fluoride slurry topcoat and cured.

Example 9

A coating composition of the invention of the type disclosed by Allen (U.S. Patent No. 3,248,251) is prepared by mixing the following components:

| | | |
|---|---|---|
| $MgCr_4 \cdot 7H_2O$ | 266 g | |
| $H_3PO_4$ | 98 g | |
| $Mg(H_2PO_4)_2 \cdot 3H_2O$ $H_2O$ to 1000 cc. | | |
| Cool to room temperature | 272 g | |
| Aluminum powder (spherical, 5—10 mμ) | 600 g | |

To the prepared composition was added 65 g of zinc chromate. The composition may be coated on ordinary steel stock (SAE 1010 steel) by spraying, drying at 26.7°C (80°F) and then curing at about 129.4°C (265°F) for 15 minutes. However, any other suitable substrate may be used in place of the steel, i.e., nickel, chromium, stainless steel, etc.

Similarly, there may be prepared a composition wherein magnesium chromate is replaced by any one of the following chromate-containing compounds:

| | |
|---|---|
| Chromic acid | $H_2CrO_4$ or $CrO_3$ |
| Magnesium dichromate | $MgCr_2O_7$ |
| Zinc chromate | $ZnCrO_4$ |
| Zinc dichromate | $ZnCr_2O_7$ |
| Calcium dichromate | $CaCr_2O_7$ |
| Lithium dichromate | $Li_2Cr_2O_7$ |
| Magnesium dichromate plus sodium dichromate | |

These chromates/dichromates are dissolved during the binder manufacturing step.

Example 10

Following the procedure of Example 9, a coating composition is prepared as follows.

| | |
|---|---|
| MgO | 7.25 g |
| Chromic acid | 9.2 g |
| Phosphoric acid (85%) | 22 ml |
| Water | 80 ml |

The ingredients are mixed and 0.78 g of strontium chromate is added with mixing to form the coating composition.

Steel parts such as tool bits, screws, bolts, and fasteners are spray coated with the composition after suitable surface preparation. The coatings are dried in a drying cycle at 79.4°C (175°F) followed by a curing step at 343.3°C (650°F) for 30 minutes.

**Claims**

1. A coating composition for providing a part with improved salt spray resistance, which comprises
   —an aqueous acidic binder solution of dissolved phosphate ions and dissolved ions of the group of chromate ions or molybdate ions, the pH of the aqueous acidic binder being in the range of 0 to 3.0, and
   —undissolved leachable particulate chromate pigments formed of hexavalent chromium.

2. The coating compositions of claim 1 wherein said leachable particulate chromate comprises about 1 to about 20% by weight of other solids dissolved in the solution.

3. The coating composition of claim 2 wherein said leachable chromate pigment is about 1 to about 10% by weight of other solids dissolved in the solution.

4. The coating composition of claim 1 wherein said leachable chromate pigments are selected from the group consisting of strontium chromate, zinc yellow, zinc tetroxy chromate, zinc potassium chromate and zinc chromate.

5. The coating composition of claim 1 including particulates of member selected from the group consisting of fumed silica, fumed alumina and colloidal alumina.

6. The coating composition of claim 1 including metal particles.

7. The coating composition of claim 6 wherein said metal particles are aluminum.

8. The coating composition of claim 7 wherein the ratio of aluminum particles to other solids is from

8

about 1.5 to 1 to about 5 to 1 grams per liter of the solution in which it initially is dispersed.

9. The coating composition of claim 1 including particles selected from the group consisting of graphite, refractory metal oxides, refractory carbides, nitrides, silicides and borides, and metal nitrides, silicides and borides.

10. The coating composition of claim 1 including particulate of polyvinylidene fluoride.

11. A corrosion resistant coating comprising at least one layer of substantially water-insoluble material which is the reaction product formed by reacting and curing an aqueous acidic solution of phosphate ions and ions of the group of chromate ions or molybdate ions, said layer including particulate leachable chromate pigments dispersed therein.

12. The coating of claim 11 wherein said leachable chromate pigment comprises about 1 to about 20% by weight of said acidic solution based on weight of chromate, phosphate or molybdate compounds therein.

13. The coating of claim 12 wherein said leachable chromate pigment is about 1 to about 10% by weight of said acidic solution.

14. The coating of claim 11 wherein said leachable chromate pigments are selected from the group consisting of strontium chromate, zinc yellow, zinc tetroxy chromate, zinc potassium chromate and zinc chromate.

15. The coating of claim 11 including particulates of member selected from the group consisting of fumed silica, fumed alumina and colloidal alumina and colloidal alumina being dispersed therein.

16. The coating of claim 11 including metal particles dispersed therein.

17. The coating of claim 16 wherein said metal particles are aluminum.

18. The coating of claim 11 including particulate of polyvinylidene fluoride.

19. The coating of claim 11 including a protective top coating.

20. A coated article which comprises a metal or metalloid substrate having a coating cured thereon of a composition according to any one of claims 1, 2, 3, 4, 5, 6, 7, 8, 9, or 10.

21. A method of coating a metal or metalloid part for imparting corrosion resistant property thereto, said method including the steps of:

(a) applying to a surface of said part a coating of the composition of any one of claims 1, 2, 3, 4, 5, 6, 7, 8, 9 or 10, and

(b) drying and curing said coating to thereby adhere the coating to the part and retain the leachable chromate pigments therein.

**Patentansprüche**

1. Beschichtungsmasse zum Ausrüsten eines Teils mit verbesserter Salzsprühnebelbeständigkeit, enthaltend

—eine wäßrige saure Bindemittellösung aus gelösten Phosphationen und gelösten Ionen aus der Gruppe der Chromat- oder Molybdationen, wobei der pH-Wert der wäßrigen sauren Bindemittels im Bereich von 0 bis 3,0 liegt, und

—ungelöste auslaugbare, aus sechswertigem Chrom gebildete Chromatpigmentteilchen.

2. Beschichtungsmasse nach Anspruch 1, dadurch gekennzeichnet, daß die auslaugbaren Chromatteilchen etwa 1 bis etwa 20 Gew.-% der anderen in der Lösung gelösten Feststoffe ausmachen.

3. Beschichtungsmasse nach Anspruch 2, dadurch gekennzeichnet, daß das auslaugbare Chromatpigment etwa 1 bis etwa 10 Gew.-% der anderen in der Lösung gelösten Feststoffe ausmacht.

4. Beschichtungsmasse nach Anspruch 1, dadurch gekennzeichnet, daß die auslaugbaren Chromatpigmente aus der Strontiumchromat, Zinkgelb, Zinktetroxychromat, Zinkkaliumchromat und Zinkchromat umfassenden Gruppe ausgewählt sind.

5. Beschichtungsmasse nach Anspruch 1, dadurch gekennzeichnet, daß sie teilchenförmige Vertreter aus der pyrogenes Siliciumdioxid, pyrogenes Aluminiumoxid und kolloidales Aluminiumoxid umfassenden Gruppe enthält.

6. Beschichtungsmasse nach Anspruch 1, dadurch gekennzeichnet, daß sie Metallteilchen enthält.

7. Beschichtungsmasse nach Anspruch 6, dadurch gekennzeichnet, daß die Metallteilchen Aluminium umfassen.

8. Beschichtungsmasse nach Anspruch 7, dadurch gekennzeichnet, daß das Verhältnis der Aluminiumteilchen zu den anderen Feststoffen etwa 1,5 bis 1 bis etwa 5 bis 1 g pro Liter der Lösung, in der sie anfangs dispergiert worden sind, beträgt.

9. Beschichtungsmasse nach Anspruch 1, dadurch gekennzeichnet, daß sie Teilchen der Graphit, feuerfeste Metalloxide, feuerfeste Carbide, Nitride, Silicide und Boride sowie Metallnitride, -silizide und -boride umfassenden Gruppe enthält.

10. Beschichtungsmasse nach Anspruch 1, dadurch gekennzeichnet, daß sie Teilchen aus Polyvinylidenfluorid enthält.

11. Korrosionsbeständige Beschichtung, mit zumindest einer Schicht aus im wesentlichen wasserunlöslichem Material, welches des Reaktionsprodukt der Umsetzung und Aushärtung einer wäßrigen sauren Lösung aus Phosphationen und Ionen aus der Gruppe der Chromat- oder Molybdationen ist, wobei die Schicht dispergierte auslaugbare Chromatpigmentteilchen enthält.

12. Beschichtung nach Anspruch 11, dadurch gekennzeichnet, daß das auslaugbare Chromatpigment etwa 1 bis etwa 20 Gew.-% der sauren Lösung, bezogen auf das Gewicht der Chromat-, Phosphat- oder Molybdatverbindungen, ausmacht.

13. Beschichtung nach Anspruch 12, dadurch gekennzeichnet, daß das auslaugbare Chromatpigment etwa 1 bis etwa 10 Gew.-% der sauren Lösung ausmacht.

14. Beschichtung nach Anspruch 11, dadurch gekennzeichnet, daß die auslaugbaren Chromatpigmente aus der Strontiumchromat, Zinkgelb, Zinktetroxychromat, Zinkkaliumchromat und Zinkchromat umfassenden Gruppe ausgewählt sind.

15. Beschichtung nach Anspruch 11, dadurch gekennzeichnet, daß sie dispergierte teilchenförmige Vertreter aus der pyrogenes Siliziumdioxid, pyrogenes Aluminiumoxid und kolloidales Aluminiumoxid umfassenden Gruppe enthält.

16. Beschichtung nach Anspruch 11, dadurch gekennzeichnet, daß sie darin dispergierte Metallteilchen enthält.

17. Beschichtung nach Anspruch 16, dadurch gekennzeichnet, daß die Metallteilchen Aluminium umfassen.

18. Beschichtung nach Anspruch 11, dadurch gekennzeichnet, daß sie Teilchen aus Polyvinylidenfluorid enthält.

19. Beschichtung nach Anspruch 11, dadurch gekennzeichnet, daß sie eine schützende Deckbeschichtung aufweist.

20. Beschichteter Gegenstand, mit einem Substrat aus Metall oder einem Metalloid und einer darauf ausgehärteten Beschichtung aus einer Masse nach einem der Ansprüche 1, 2, 3, 4, 5, 6, 7, 8, 9 oder 10.

21. Verfahren zum Beschichten eines Teils aus Metall oder einem Metalloid zur Verleihung von Korrosionsbeständigkeitseigenschaften, dadurch gekennzeichnet, daß man

(a) auf einer Oberfläche des Teils eine Beschichtung aus der Masse nach einem der Ansprüche 1, 2, 3, 4, 5, 6, 7, 8, 9 oder 10 aufträgt und

(b) die Beschichtung trocknet und aushärtet, um die Beschichtung mit dem Teil zu verhaften und die auslaugbaren Chromatpigmente darin zu binden.

**Revendications**

1. Composition de revêtement destinée à améliorer la résistance d'une partie à la vaporisation saline, comprenant:

—une solution d'un liant aqueux acide formé d'ions phosphate dissous et d'ions dissous appartenant au groupe des ions chromate ou des ions molybdate, le pH de ce liant aqueux acide étant situé dans l'intervalle de 0 à 3.0, et

—des pigments de chromate particulaires lixiviables, non dissous formés par du chromium hexavalant.

2. Composition de revêtement selon la revendication 1, dans laquelle le chromate particulaire lixiviable comprend d'environ 1 à environ 20% en poids d'autres solides dissous dans la solution.

3. Composition de revêtement selon la revendication 2, dans laquelle le pigment de chromate lixiviable constitue environ 1 à environ 10% en poids des autres solides dissous dans la solution.

4. Composition de revêtement selon la revendication 1, dans laquelle les pigments de chromate lixiviables sont sélectionnés dans un groupe comprenant le chromate de strontium, le jaune de zinc, le tetroxy chromate de zinc, le chromate de potassium et de zinc, et le chromate de zinc.

5. Composition de revêtement selon la revendication 1, comprenant des particules d'un constituant sélectionné dans le groupe des vapeurs de silice, vapeurs d'alumine et alumine colloidale.

6. Composition de revêtement selon la revendication 1, contenant des particules de métal.

7. Composition de revêtement selon la revendication 6, dans laquelle lesdites particules de métal sont de l'aluminium.

8. Composition de revêtement selon la revendication 7, dans laquelle le rapport entre les particules d'aluminium et les autres solides est d'environ 1,5 à 1 jusqu'à environ 5 à 1 grammes par litre de solution dans laquelle il est initialement dispersé.

9. Composition de revêtement selon la revendication 1, comprenant des particules sélectionnées dans le groupe comprenant le graphite, les oxydes métalliques réfractaires, les carbures réfractaires, nitrures, siliciures et borures, et les nitrures, siliciures et borures de métal.

10. Composition de revêtement selon la revendication 1, contenant des particules de fluorure de polyvinylidene.

11. Revêtement résistant à la corrosion comprenant au moins une couche de matériau essentiellement insoluble dans l'eau qui constitue le produit de réaction formé en faisant réagir puis en cuisant une solution aqueuse acide d'ions phosphate et d'ions choisis dans le groupe des ions chromate ou des ions molybdate, ladite couche comprenant des pigments particulaires de chromate lixiviables l'état dispersé.

12. Revêtement selon la revendication 11, dans lequel le pigment de chromate lixiviable comprend environ 1 à environ 20% en poids de ladite solution acide, basé sur le poids des composés chromate, phosphate ou molybdate.

13. Revêtement selon la revendication 12, dans lequel le pigment de chromate lixiviable constitue d'environ 1 à environ 10% en poids de ladite solution acide.

14. Revêtement selon la revendication 11, dans lequel les pigments de chromate lixiviables sont sélectionnés dans le groupe comprenant le chromate de strontium, le jaune de zinc, le tetroxy chromate de zinc, le chromate de potassium et de zinc, et le chromate de zinc.

15. Revêtement selon la revendication 11, contenant un constituant particulaire sélectionné dans le groupe consistant en vapeurs de silice, vapeurs d'alumine, et alumine colloidale dispersées dans le revêtement.

16. Revêtement selon la revendication 11, contenant des particules de métal à l'état dispersé.

17. Revêtement selon la revendication 16, dans lequel les particules de métal sont de l'aluminium.

18. Revêtement selon la revendication 11, contenant du fluorure de polyvinylidene sous forme de particules.

19. Revêtement selon la revendication 11, contenant un revêtement externe de protection.

20. Article couvert par un revêtement qui comprend un substrat métallique ou métalloide, une composition de revêtement selon l'une quelconque des revendications 1, 2, 3, 4, 5, 6, 7, 8, 9 ou 10, cuite sur ce substrat.

21. Méthode de revêtement d'une partie métallique ou métalloide, destinée à lui conférer des propriétés de résistance à la corrosion, ladite méthode comprenant les étapes suivantes:

(a) appliquer à une surface de ladite partie une composition de revêtement selon l'une quelconque des revendications 1 à 9, et

(b) sécher et cuire ledit revêtement pour lui permettre d'adhérer à la partie et de retenir les pigments de chromate lixiviables.